# FASCICULE DE BREVET EUROPEEN

(11) **EP 1 480 737 B1**
(45) Date de publication et mention de la délivrance du brevet: **04.04.2012**
(21) Numéro de dépôt: 03718885.1
(22) Date de dépôt: 17.02.2003
(51) Int. Cl.: B01J 8/02

(54) **INSTALLATION DE TRAITEMENT D'AU MOINS UN FLUIDE, ET UTILISATION POUR LA SEPARATION D'AU MOINS UN CONSTITUANT D'UN MELANGE GAZEUX**
VORRICHTUNG ZUR BEHANDLUNG EINER FLÜSSIGKEIT UND ANWENDUNG ZUR ABSCHEIDUNG VON MINDESTENS EINEM BESTANDTEIL AUS EINER GASMISCHUNG
INSTALLATION FOR TREATING AT LEAST ONE FLUID AND USE THEREOF FOR THE SEPARATION OF AT LEAST ONE CONSTITUENT FROM A GAS MIXTURE

(30) Priorité: 26.02.2002 FR 0202392
(43) Date de publication de la demande: 01.12.2004
(73) Titulaire: L'AIR LIQUIDE, Société Anonyme pour l'Etude et l'Exploitation des Procédés Georges Claude, 75007 Paris (FR)
(72) Inventeur: LEHMAN, Jean-Yves, F-94700 Maisons-Alfort (FR); DAVIDIAN, Benoît, F-94100 Saint-Maure des Fosses (FR); FERT, Philippe, F-84110 Faucon (FR)
(74) Mandataire: Le Moenner, Gabriel
(86) Numéro de dépôt international: PCT/FR2003/000508
(87) Numéro de publication internationale: WO 2003/072238

(56) Documents cités:
- EP-A- 0 778 082
- US-A- 3 960 520
- US-A- 3 987 148
- US-A- 4 670 226

## Description

La présente invention concerne des installerons de traitement d'au moins un fluide, du type comprenant, dans un récipient, au moins une masse de matériau particulaire retenue entre deux parois perforées et dans laquelle circule le fluide selon une direction sensiblement horizontale, et, au voisinage de la partie supérieure de la masse, au moins une surface déflectrice s'étendant depuis une première desdites parois vers la deuxième paroi en formant un angle avec la direction horizontale d'écoulement du fluide.

Une installation de ce type est décrite dans le document FR-A-2741823. Dans les Installations décrites dans ce document, le volume autour de la zone ouverte de chargement en matériau particulaire à l'extrémité de la surface déflectrice est entièrement occupé par le matériau particulaire.

Pour améliorer la circulation du fluide à traiter, le document EP0778082 enseigne d'utiliser une surface déflectrice formant un angle avec la direction principale du flux de fluide traversant la masse de matériau particulaire.

Les inventeurs ont constaté qu'une telle installation pouvait être rendue plus efficace en ménageant, selon une caractéristique de l'invention, une zone libre dépourvue de matériau particulaire au voisinage de la deuxième paroi, en regard de l'extrémité adjacente de la surface déflectrice.

Les inventeurs ont en effet constaté qu'une telle zone libre favorise un passage des gaz en bout de surface déflectrice et permet ainsi de réduire la temps de contact de ces gaz avec le matériau particulaire en partie haute de la masse. L'objet de l'invention est défini dans le libellé de la revendication 1. D'autre aspects sont définis dans les revendications 2 - 4.

L'invention a également pour objet l'utilisation d'une telle installation pour la séparation d'au moins un constituant d'un mélange gazeux, par exemple le séchage ou l'épuration d'un gaz et/ou la séparation d'au moins un constituant d'un mélange gazeux, notamment l'épuration d'un flux d'air à distiller ou la production d'oxygène et/ou d'azote à partir d'un flux d'air, tel que défini dans les libellés des revendications 5 et 6.

D'autres caractéristiques et avantages de l'invention ressortiront de la description suivante de modes de réalisation, donnés à titre illustratif mais nullement limitatifs, faites en relation avec les dessins annexés, sur lesquels :
- La Figure 1 est une vue en coupe verticale de la partie supérieure d'une installation selon l'invention à masse de matériau particulaire annulaire avec deux modes de réalisation différents sur les parties gauche et droite de cette installation ; et
- La Figure 2 est une vue partielle en coupe verticale d'une autre variante de réalisation de l'invention.

Dans la description qui va suivre et sur les dessins, les éléments identiques ou analogues portent les mêmes chiffres de référence, éventuellement indicés.

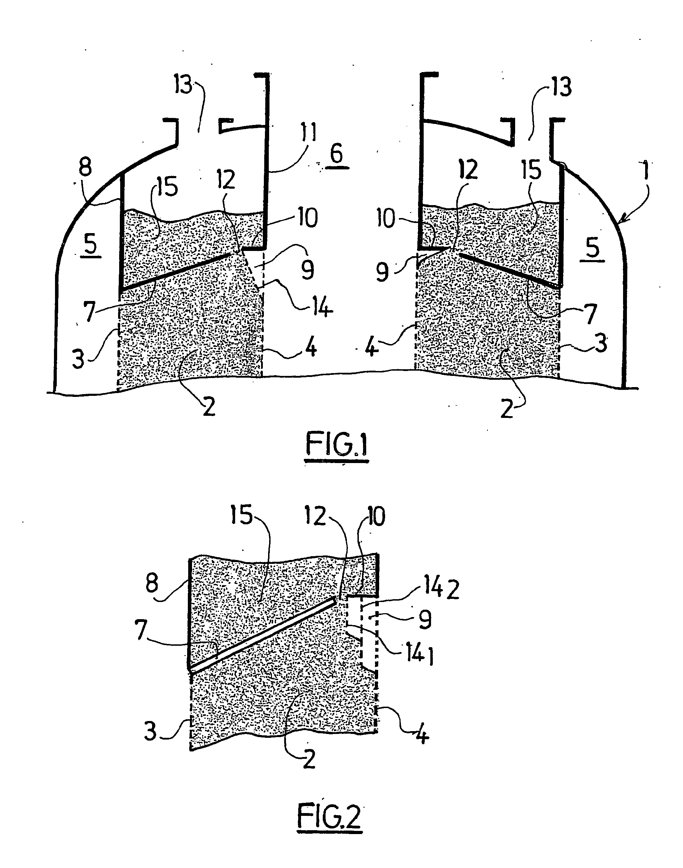

Sur la Figure 1, on a représenté un mode de réalisation d'un réacteur ou dispositif d'adsorption comprenant un récipient 1 vertical contenant au moins une masse 2, annulaire dans le mode de réalisation représenté, de matériau particulaire, typiquement d'adsorbant, retenu entre deux parois perforées concentriques 3 et 4 délimitant, dans le récipient 1, une chambre annulaire extérieure 5 et une chambre intérieure 6 entre lesquelles circule le fluide par traversée radiale de la masse 2.

Dans la zone supérieure de la masse d'adsorbant 2, une surface déflectrice 7 s'étend à partir de la zone de jonction entre la paroi perforée externe 3 et la paroi ou virole pleine 8 de liaison prolongeant la paroi perforée vers le haut jusqu'au voisinage du dôme du récipient 1.

Selon l'invention, en regard de l'extrémité libre de la surface déflectrice 7, est ménagée une zone 9 dépourvue de matériau particulaire. De façon plus spécifique, cette zone 9 est délimitée en haut par une plaque annulaire 10 s'étendant sensiblement horizontalement vers l'extérieur à partir de la zone de jonction entre la paroi perforée intérieure 4 et la virole pleine de liaison 11, la plaque 10 s'étendant jusqu'en face de l'extrémité libre de la surface déflectrice 7 pour ménager avec cette dernière le passage annulaire 12 permettant de charger en matériau particulaire l'espace entre les parois perforées 3 et 4 en déversant ce matériau particulaire dans la récipient 1 via les ouvertures de chargement hautes 13.

Comme représenté sur la partie droite de la figure 1, l'espace libre 9 peut être obtenu grâce à la seule présence de la plaque 10, s'étendant avantageusement horizontalement, par effet de talutage naturel lors du remplissage du volume entre les parois perforées 3 et 4.

Pour contrôler plus précisément le volume libre 9 et ne pas être limité par l'angle de talutage naturel du matériau particulaire, on prévoira de délimiter cette zone libre par au moins une paroi perforée 14 s'étendant entre l'extrémité libre de la plaque 10 et la paroi perforée 4, comme représenté sur la partie gauche de la Figure 1, où deux parois perforées annulaires concentriques de longueurs différentes 14₁ et 14₂, s'étendant axialement vers le bas depuis l'extrémité libre de la plaque 10 et d'une zone médiane de cette dernière, l'espace 9 étant alors délimité vers le bas par l'angle de talutage naturel du matériau particulaire à partir des extrémités libres des parois perforées 14₁ et 14₂.

Comme on le voit sur les dessins, seule la zone libre 9 est dépourvue de matériau particulaire au voisinage de l'extrémité libre de la surface déflectrice 7 qui demeure noyée dans le matériau particulaire sous la garde 15 de matériau particulaire isolant la partie active 2 et permettant de compléter le remplissage de cette dernière lors de son tassement en utilisation.

Des modifications et variantes peuvent être apportées dans le cadre des revendications ci-après. Ainsi, en variante du mode de réalisation de la Figure 2, des parois annulaires 14₁ peuvent être disposées « en escalier », écartées radialement, à partir de la paroi interne 14₁ via des supports annulaires horizontaux reliant le bas de la paroi amont au haut de la paroi aval suivante.

Dans le cas d'installation comprenant deux lits adjacents de matériau particulaires, par exemple d'alumine et de zéolite, séparés par une paroi perforée intermédiaire, on peut combiner dans l'un et l'autre lits une paire d'arrangements selon les variantes décrites ci-dessus.

## Revendications

1. Installation de traitement d'au moins un fluide, comprenant, dans un récipient (1), au moins une masse de matériau particulaire (2) retenue entre deux parois perforées (34) et dans laquelle circule le fluide selon une direction sensiblement horizontale, et, au voisinage de la partie supérieure de la masse (2) :
- au moins une surface déflectrice (7) s'étendant depuis une première (3) desdites parois vers la deuxième paroi (4) en formant un angle avec la direction horizontale d'écoulement du fluide, et présentant du côté de la deuxième paroi une extrémité libre ; et
- une deuxième surface (10) s'étendant depuis la deuxième paroi (4) vers l'extrémité libre de la surface déflectrice (7),
**caractérisée en ce qu'**elle comporte une zone libre (9) dépourvue de matériau particulaire délimitée en haut par la deuxième surface (10) et en regard de l'extrémité libre de la surface déflectrice (7), et **en ce que** la zone libre (9) est délimitée latéralement par au moins une paroi perforée (14 ;14₁ ;14₂) s'étendant vers le bas depuis la deuxième surface (10).

2. Installation selon la revendication 1, **caractérisée en ce que** la deuxième surface (10) s'étend sensiblement horizontalement,

3. Installation selon l'une des revendications précédentes, **caractérisée en ce que** les première et deuxième parois (3,4) sont annulaires concentriques.

4. Installation selon l'une des revendications précédentes, **caractérisée en ce que** le matériau particulaire contient au moins un adsorbant.

5. Utilisation d'une installation selon l'une des revendications précédentes pour la séparation d'au moins un constituant d'un mélange gazeux.

6. Utilisation selon la revendication 6, où le mélange gazeux est l'air.

## Claims

1. Plant for treating at least one fluid, comprising, in a container (1), at least one mass of particulate matter (2), which is held between two perforated walls (3, 4) and in which the liquid circulates in a substantially horizontal direction, and, in the vicinity of the upper portion of the mass (2):
- at least one deflecting surface (7) extending from a first (3) of said walls towards the second wall (4), forming an angle with the horizontal flow direction of the liquid, and having a free end on the side of the second wall; and
- a second surface (10) extending from the second wall (4) towards the free end of the deflecting surface (7),
**characterised in that** it comprises a free region (9) without particulate matter, limited at the top by the second surface (10) and facing the free end of the deflecting surface (7), and **in that** the free region (9) is limited laterally by at least one perforated wall (14; 14₁; 14₂) which extends downwards from the second surface (10).

2. Plant according to claim 1, **characterised in that** the second surface (10) extends substantially horizontally.

3. Plant according to any one of the preceding claims, **characterised in that** the first and second walls (3, 4) are annular and concentric.

4. Plant according to any one of the preceding claims, **characterised in that** the particulate matter contains at least one adsorbent.

5. Use of a plant according to any one of the preceding claims for separating at least one component of a gas mixture.

6. Use according to claim 6, wherein the gas mixture is air.

## Patentansprüche

1. Vorrichtung zur Behandlung von mindestens einem Fluid, enthaltend, in einem Behälter (1), mindestens eine Masse aus teilchenförmigem Material (2), die zwischen zwei mit Löchern durchsetzten Wänden (3, 4) zurückgehalten wird und von dem Fluid entlang in einer im Wesentlichen horizontalen Richtung durchströmt wird, und in der Nähe des oberen Teils der Masse (2)
- mindestens eine Ablenkfläche (7), die sich von einer ersten (3) der Wände in Richtung der zweiten Wand (4) erstreckt, indem sie mit der horizontalen Stromrichtung des Fluids einen Winkel bildet, und auf der Seite der zweiten Wand ein freies Ende aufweist; und
- eine zweite Fläche (10), die sich von der zweiten Wand (4) in Richtung des freien Endes der Ablenkfläche (7) erstreckt,
**dadurch gekennzeichnet, dass** sie eine freie Zone (9) ohne teilchenförmiges Material aufweist, die durch die zweite Fläche (10) in der Höhe begrenzt wird und dem freien Ende der Ablenkfläche (7) gegenüberliegt und dass die freie Zone (9) seitlich durch mindestens eine mit Löchern durchsetzte Wand (14; 14₁; 14₂) begrenzt wird, die sich von der zweiten Fläche (10) nach unten erstreckt.

2. Vorrichtung nach Anspruch 1, **dadurch gekennzeichnet, dass** sich die zweite Fläche (10) im Wesentlichen in horizontaler Richtung erstreckt.

3. Vorrichtung nach einem der vorhergehenden Ansprüche, **dadurch gekennzeichnet, dass** die erste und die zweite Wand (3, 4) konzentrisch ringförmig sind.

4. Vorrichtung nach einem der vorhergehenden Ansprüche, **dadurch gekennzeichnet, dass** das teilchenförmige Material mindestens einen Adsorber enthält.

5. Verwendung einer Vorrichtung nach einem der vorhergehenden Ansprüche für die Abscheidung von mindestens einem Bestandteil aus einem Gasgemisch.

6. Verwendung nach Anspruch 6, wobei das Gasgemisch Luft ist.
